# EUROPEAN PATENT APPLICATION

(11) **EP 4 160 555 A1**
(43) Date of publication of application: **05.04.2023**
(21) Application number: 21812022.8
(22) Date of filing: 26.05.2021
(51) Int. Cl.: G07C 9/10, G07C 9/00, G07C 9/25, G08B 21/18

(54) **INTELLIGENT INTEGRATED SECURITY SYSTEM AND METHOD**

(30) Priority: 27.05.2020 KR 20200063602
(71) Applicant: Incheoninternational Airport Corporation, Incheon 22382 (KR)
(72) Inventor: LEE, Kwon-Jin, Incheon 22370 (KR)
(74) Representative: Zimmermann, Tankred Klaus
(86) International application number: PCT/KR2021/095057
(87) International publication number: WO 2021/242081

(57) **Abstract**

Provided is an intelligent integrated security system, which integrates access control information with security search information at the time of entry/exit of a visitor (subject of a search) and a leaver, so as to individually and accurately extract, and store and/or manage visitors and leavers. The intelligent integrated security system comprises: a door opened by the recognition of admission information about a first visitor; a search board sensor for sensing the first visitor passing and moving through the door; an image capturing device for acquiring an entry image and facial image information about the first visitor; and an access control server, which divides the admission information, the facial image information, and the entry image by visitor to store same in an integrated information database.

## Description

### [Technical Field]

The present invention relates to an intelligent integrated security technology, and more particularly, to a system and method that can accurately classify, store, and manage the access information of a security area and security check information for a visitor for the security area.

### [Background Art]

In general, in the case of identifying a visitor at international or domestic airports, a security personnel compares the facial image of a pass with a visitor with the naked eye to determine that they are the same person. To do this, the facial image taken at the time the pass is issued by a visitor having a regular pass entering the security area is compared with the facial image taken at the entrance at the time of entry, and after identifying that they are the same person, the visitor is allowed to enter. For other visitors with pass, there is no facial image taken at the time of pass issuance. Thus, an access control system for an airport security area has been proposed to control entry by identifying that the visitor is the same person when moving and entering the security area based on the facial image of the person who was first photographed at the entrance at the time of entry.

However, since such a system was developed with a focus on the access control function for the number of people entering a protected area, there is a problem that it is not suitable for an access control environment in which a security check by a security personnel or the like must be performed.

In addition, it was developed to identify only the presence/absence of authority to enter the security area for those waiting to enter the security area without considering the environment that requires security check, and to allow access to the security area unconditionally. In addition, even though the security check of a preceding visitor (a subject of search inspection) has not been completed, a large number of people waiting for access can bypass the security personnel's control and enter the security area at the same time. In this case, aviation security accidents such as "unauthorized entry into the security area" occur and this is vulnerable to security.

Therefore, efforts have been made to solve the problems by controlling the recognition of the pass of the visitor when the security check of the preceding visitor is not completed by additionally deploying a dedicated control personnel to control and monitor unauthorized access of the waiting person. However, despite the control of the control personnel, cases of recognizing the pass and allowing entry without authorization are constantly occurring during rush hour.

In addition, if, despite not completing the security check of preceding visitors (subjects of search inspection), the instructions of the control personnel are ignored and a large number of people waiting for entry enters the security area at the same time, aviation security accidents such as entry violations and smuggling due to unauthorized entry into the security area are occurring.

In addition, due to a synchronization problem with an image display system, when a large number of visitors enters the security area without authority, and errors occur continuously in a system in which the pass information and the image at the time of pass issuance was displayed to the security personnel to identify that the visitor is the same person.

In addition, although X-ray inspection of personal belongings is carried out at some exits, there is no system that displays pass information and images at the time of pass issuance so that the security personnel identifies that the visitor is the same person, and instead, the identity of a leaver is identified by the security personnel. As a result, the level of security at the exit is significantly lower than that of the entrance.

In addition, a follow-up tracking makes it difficult to detect terrorist articles and contraband, and even if a follow-up tracking is successful, it is not possible to identify the person who brought in the terrorist articles and contraband into the security area (evidence admissibility, articles (identified by x-ray images, etc.)). Thus, there is a problem in that it is difficult to precisely specify the owner of such articles.

In addition, in the case that the contraband cannot be caught on-site at the exit, there is a problem in that the follow-up tracking is practically impossible because all information stored and managed individually, such as closed circuit television (CCTV) and access records, must be investigated.

In addition, since there is no function to inquire information at the time of entry such as images (X-ray) of carry-in articles and access records for each visitor, even if a suspected contraband is detected, if the exporter claims that the article was brought in when entering the security area, there is a problem in that it is difficult to determine whether it is contraband or not.

In addition, since the generated data is unconditionally stored, it is impossible to accurately classify the visitors and store the data individually, so there is a problem in that the data cannot be used efficiently.

### [Disclosure]

### [Technical Problem]

In order to solve the above conventional problems, an object of the present invention is to provide an intelligent integrated security system and method that can accurately extract, store and/or manage a visitor and a leaver individually by integrating security check information and access control information at the time of entry/exit of a visitor (a subject of search inspection) and a leaver.

In addition, another object of the present invention is to provide an intelligent integrated security system and method that can accurately recognize a process from recognition of a pass to completion of a search, and accurately recognize and store data at a point in time rather than an integrated storage period (time).

In addition, another object of the present invention is to provide an intelligent integrated security system and method that can search/inquire/track and manage security check information at the time of entry and exit for each visitor and each leaver when a security accident occurs, and apply block chain technology to stored data for securing evidence admissibility.

In addition, another object of the present invention is to provide an intelligent integrated security system and method that can accurately compare security check information when a visitor enters a security area with security check information when the visitor exits, and can record and maintain the images of incoming and carry-in articles through an X-ray, evicted articles, carry-out articles, carry-out contraband, and carry-in terrorist articles.

In addition, another object of the present invention is to provide an intelligent integrated security system and method that can detect terrorist items and contraband more thoroughly by analyzing and comparing the inquiry (X-ray image) of carry-in/carry-out articles of a certain visitor in real time through deep learning technology, automatically recognizing the case where the articles not brought in when a leaver enters are carried out, and notifying a security personnel of the recognized case through voice, graphic, text messages, etc.

In addition, another object of the present invention is to provide an intelligent integrated security system and method that can inquiry (an X-ray image) and compare carry-in/carry-out articles of a certain visitor for a certain period of time.

In addition, another object of the present invention is to provide an intelligent integrated security system and method that can search and manage the classification of entry personnel and results performed by a specific security personnel when an accident occurs.

In addition, another object of the present invention is to provide an intelligent integrated security system and method that can develop an integrated security technology capable of being easily introduced and operated regardless of the type of an existing access control system or security system.

### [Technical Solution]

In order to achieve the above-mentioned objects, the present invention provides an intelligent integrated security system that can accurately extract, store and/or manage a visitor and a leaver individually by integrating security check information and access control information at the time of entry/exit of a visitor (a subject of search inspection) and a leaver.

An intelligent integrated security system includes
a door;
a search completion detection means for generating access information by sensing a visitor entering the door and moving to a search area; and
an access control server that opens or closes the door in order to permit or block an entry of another visitor according to whether or not search for the visitor is completed using the access information.

In addition, the access control server does not recognize and ignores the access information for the other visitor after the visitor until the search is completed by the search completion detection means.

In addition, wherein the access information is stored in an integrated information database as big data through a unique key value for each visitor.

In addition, the access information includes pass information, facial image information, and an access image for entry of the door, and the big data includes authority information, entry date and time information, entry and exit serial number information along with the access information.

In addition, the entry and exit are 1:1, and two consecutive entry or exit is impossible.

In addition, the system includes an X-ray that generates an X-ray image by sensing belongings of the visitor and other visitor.

In addition, if the X-ray image is different when entering and exiting, alarm information is generated.

In addition, the system includes a detection means for detecting only the presence or absence of belongings, and stores a result of the detected presence or absence.

In addition, whether or not the search for the visitor is completed is performed using entry and exit times of the visitor extracted from the access information generated through an image capturing devices installed at both ends of the search area.

In addition, whether or not the search for the visitor is performed is determined through a search completion signal of a sensor installed at an end of the search area.

Meanwhile, another embodiment of the present invention provides an intelligent integrated security method comprising the steps of (a) generating access information by sensing a visitor entering a door and moving to a search area by a search completion detection means; (b) determining, by an access control server, whether or not to complete search for the visitor using the access information; (c) opening or closing, by the access control server, the door in order to permit or block an entry of another visitor according to a determination result.

Meanwhile, still another embodiment of the present invention provides a computer-readable storage medium storing program code for executing the above-described intelligent integrated security method.

### [Advantageous Effects]

According to the present invention, a visitor and a leaver can be accurately extracted, stored, and/or managed by integrating security check information and access control information at the time of entry/exit of the visitor (subject of search inspection) and the leaver.

In addition, as another effect of the present invention, the system can accurately recognize the process from recognition of a pass to completion of the search for each visitor and each leaver, and can accurately recognize and store the data at the point in time, not the integrated storage period (time). The number of articles and search information for prohibited articles (knife, liquids, etc.) can also be stored using deep learning technology. In other words, the list and number of articles at the time of entry and exit can be stored together with the images of articles at the time of entry and at the time of exit through deep learning technology.

In addition, as another effect of the present invention, in the event of a security accident, security check information at the time of entry/exit for each visitor and each leaver can be searched/inquired/tracked and managed, and block chain technology can be applied to stored data to secure the legal admissibility of evidence.

In addition, as another effect of the present invention, the security check information when a visitor enters a security area is compared with the security check information when the visitor exits, and the images of incoming and carry-in articles through an X-ray, evicted articles, carry-out articles, carry-out contraband, and carry-in terrorist articles can be recorded, maintained, and managed.

In addition, as another effect of the present invention, it is possible to inquire (an X-ray image) and compare the carry-in/carry-out articles of a certain visitor for a certain period of time.

In addition, as another effect of the present invention, it is possible to search and manage the classification of entry personnel and results performed by a specific security personnel when an accident occurs

In addition, as another effect of the present invention, it can develop an integrated security technology capable of being easily introduced and operated regardless of the type of an existing access control system or security system.

In addition, as another effect of the present invention, it is possible to give a security threat level to each resident employee based on a comprehensive analysis of the history and access pattern (entry area and time, etc.) of carry-in articles for each visitor.

In addition, as another effect of the present invention, it can analyze and compare the inquiry (an X-ray image) of carry-in/carry-out articles of a certain visitor in real time through deep learning technology, automatically recognize the case where the articles not brought in when a leaver enters are carried out, and notify a security personnel of the recognized case through a combination of voice, text message, graphic.

### [Description of Drawings]

FIG. 1 illustrates a conceptual diagram of an intelligent integrated security execution procedure upon entry according to an embodiment of the present invention.
FIG. 2 illustrates a chart timing diagram of an intelligent integrated security execution procedure upon entry according to an embodiment of the present invention.
FIG. 3 illustrates a conceptual diagram of an intelligent integrated security execution procedure upon exit according to an embodiment of the present invention.
FIG. 4 illustrates a chart timing diagram of an intelligent integrated security execution procedure upon exit according to an embodiment of the present invention.
FIG. 5 illustrates a configuration block diagram of an integrated security execution system according to an embodiment of the present invention.
FIG. 6 is a diagram illustrating an overlapping process of a general security check task.
FIG. 7 illustrates a flowchart of an intelligent integrated security execution procedure upon entry according to an embodiment of the present invention.
FIG. 8 illustrates a flowchart of an intelligent integrated security execution procedure upon exit according to an embodiment of the present invention.

### [Mode for Invention]

Since the present invention may be variously modified and have several embodiments, specific embodiments will be shown in the accompanying drawings and be described in detail. However, it is to be understood that the present invention is not limited to the specific embodiments, but includes all modifications, equivalents, and substitutions included in the spirit and the scope of the present invention.

Throughout the accompanying drawings, the same reference numerals will be used to describe the same components. Terms, 'first', 'second', etc., may be used to describe various components, but the components are not to be interpreted to be limited to the terms. The terms are used to distinguish one component from another component.

For example, without departing from the scope of the present disclosure, a first structural component may be named a second structural component. Similarly, the second structural component also may be named the first structural component. Like numbers refer to like components throughout the specification. As used herein, the term "and/or" includes any and all combinations of one or more of the associated listed items.

Unless indicated otherwise, it is to be understood that all the terms used in the specification including technical and scientific terms have the same meaning as those that are understood by those who skilled in the art.

It must be understood that the terms defined by the dictionary are identical with the meanings within the context of the related art, and they should not be ideally or excessively formally defined unless the context clearly dictates otherwise.

Hereinafter, an intelligent integrated security system and method according to an embodiment of the present invention will be described in detail with reference to the accompanying drawings.

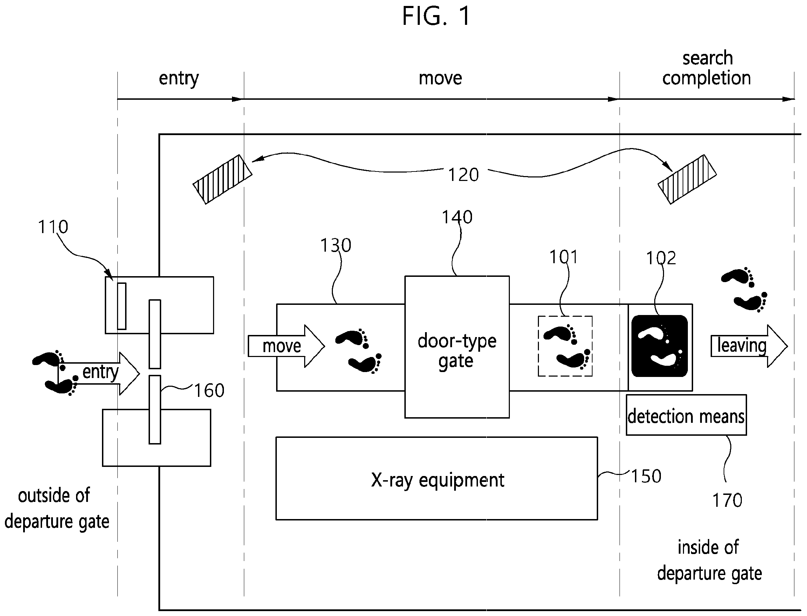

FIG. 1 illustrates a conceptual diagram of an intelligent integrated security execution procedure upon entry according to an embodiment of the present invention. Referring to FIG. 1, when a visitor enters a search area (i.e., a moving area) by recognizing a pass on an access means 110 at a door 160, an image capturing device 120 operates to capture an image. Thereafter, as the visitor continues to move through a footrest 130, the visitor sequentially passes through an X-ray equipment 150 and a door-type detector 140. The visitor finally arrives at a footrest sensor 102 for receiving the search inspection, and is inspected by a detection means 170 of a subject of search inspection. The process may be divided into an entry area, a search area (i.e., a moving area), and a search completion area. The footrest 130 may be fixed or may be a conveyor type.

The footrest sensor 102 senses the footsteps of the visitor. In other words, an on signal is generated when the visitor steps on the footrest sensor 102, and an off signal is generated when the visitor take his/her foot off. That is, a search completion signal indicating search completion is generated. Also, it is obvious that this is for illustration, and the on signal may be generated using a distance sensor or the like when the visitor arrives at a certain distance, and the off signal may be generated when the visitor leaves from a certain distance. In addition, various sensors may be used for recognizing the presence of the visitor.

The image capturing device 120, the footrest sensor 102, and the like all serve as the search completion detection means for generating a search completion signal. Accordingly, whether or not the search is completed is determined using the entry and exit times of the visitor extracted from the access information generated through the image capturing devices 120 installed at both ends of the search area. This uses the point in time at which the captured image is generated when entering and exiting. That is, when the exit time is generated after a preset time has elapsed from the entry time, the search completion signal is generated.

Alternatively, the search completion signal may be generated through the sensor 102 installed at the end of the search area.

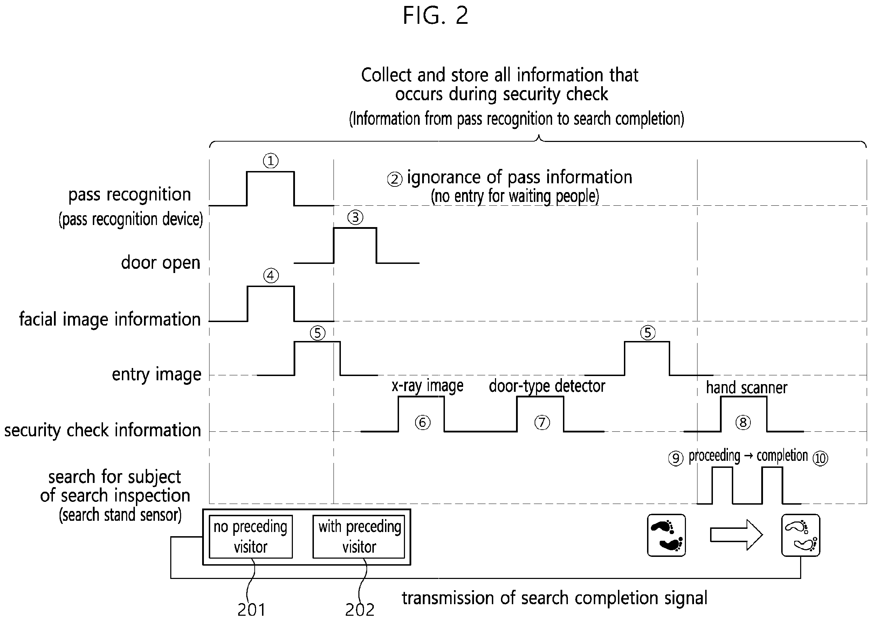

FIG. 2 illustrates a chart timing diagram of an intelligent integrated security execution procedure upon entry according to an embodiment of the present invention. Referring to FIG. 2, the intelligent integrated security execution procedure is as follows.
① A pass recognition is generated as a pass recognition device (not illustrated) senses the access means 110 of the visitor.
(2) Until the search completion signal is transmitted from the footrest sensor 102, all pass information that recognizes the person waiting to enter is ignored. In other words, in the case that there is a preceding visitor, the recognized pass information is ignored until it is changed to "no preceding visitor". On the other hand, in the case that there is no preceding visitor, after identifying the authority according to the pass information of the person waiting to enter, the search control state is changed from "No preceding visitor" to "With preceding visitor".
   In this case, the process starts and data starts to be stored. Accordingly, the pass information is stored in a database. The pass information may include authority information, entry time information, gender, address, age, unique identification number, and the like. Of course, the authority information and entry time information may be separately configured from the pass information.
③ As the door 160 is opened, the visitor enters the security area.
④ After recognition of the pass through the access means 110, the facial image information of the visitor is obtained from the image capturing device 120 and stored in the database.
⑤ The entry image is recorded through the image capturing device 120 installed at the entrance and stored in the database.
⑥ The X-ray search image for the visitor's belongings is stored in the database.
⑦ Through the value of the signal detected when the visitor passes through the door-type detector 140, only the presence/absence of possession of portable articles during passage is stored in the database.
⑧ When metal or the like is detected by the detection means 170 performed by the security personnel, the result including only the presence/absence of detection is stored in the database.
⑨ After the search by the detection means 170, the security personnel conducts a security check for the subj ect of search inspection standing at the search inspection stand 102. That is, the preceding visitor (i.e., the subject of search inspection) waits on the footrest sensor 102 to receive the security check by the security personnel.
⑩ Security check completion: When the security personnel completes the security check for the preceding visitor (that is, the subject of search inspection), the preceding visitor (subject of search inspection) descends from the footrest sensor 102 according to the instructions of the security personnel. Accordingly, the footrest sensor 102 transmits a search completion signal, and this is the case of "no preceding visitor" and the pass recognition procedure is executed (201). On the other hand, if it is the case of "with preceding visitor", the pass information is ignored, and the door is placed in a closed state (202). That is, when the waiting person is not allowed to enter, the door remains closed until the security check of the preceding visitor is completed.

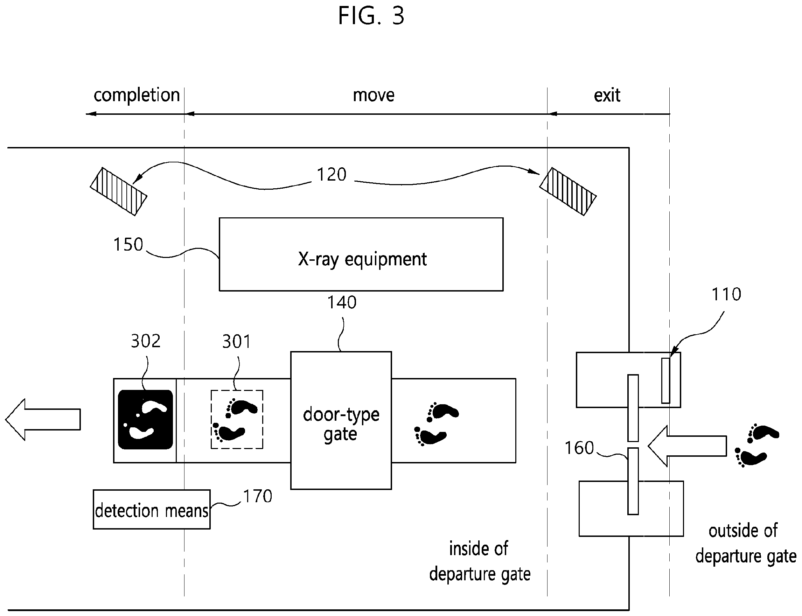

FIG. 3 illustrates a conceptual diagram of an intelligent integrated security execution procedure upon exit according to an embodiment of the present invention. Referring to FIG. 3, when the foot 301 of the visitor enters a footrest sensor 302 through the access means 110 at the door 160, the image capturing device 120 operates to capture images. Thereafter, as the visitor continues to move, the visitor sequentially passes through the X-ray equipment 150 and the door-type detector 140. The visitor is finally inspected by the search personnel through the detection means 170 at the search inspection stand 302 for receiving the inspection. Reference numeral 301 denotes a preceding visitor, but may denote the same visitor if it is not the preceding visitor. The proceeding process can be divided into exit -> move -> search completion.

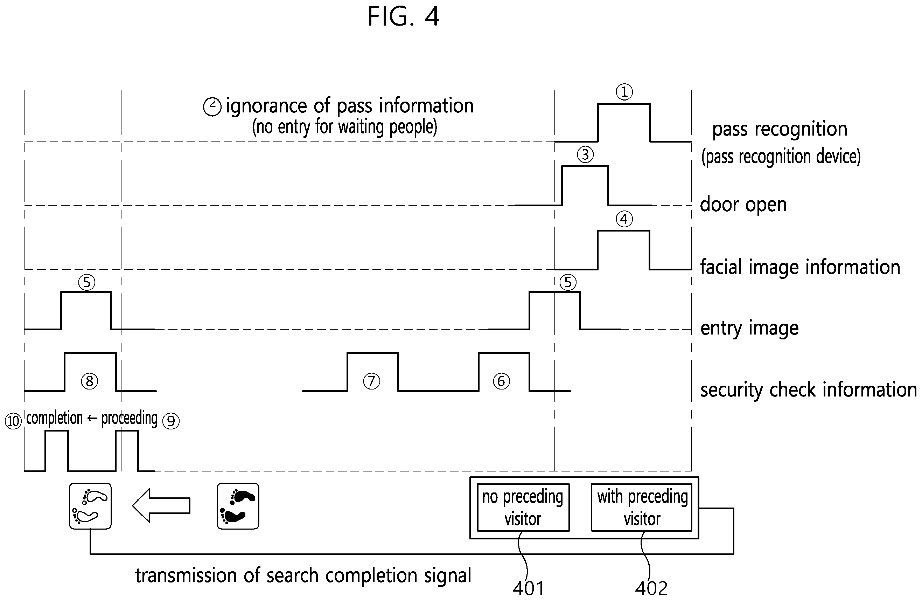

FIG. 4 illustrates a chart timing diagram of an intelligent integrated security execution procedure upon exit according to an embodiment of the present invention. Referring to FIG. 4, the intelligent integrated security execution procedure is as follows.
① A pass recognition is generated as the pass recognition device (not illustrated) detects the access means 110 of the visitor.
② Until the search completion signal is transmitted from the footrest sensor 102, all pass information that recognizes the person waiting to enter is ignored. In other words, in the case that there is a preceding visitor, the recognized pass information is ignored until it is changed to "no preceding visitor". On the other hand, in the case that there is no preceding visitor, after identifying the authority according to the pass information of the waiting visitor, the search control state is changed from "No preceding visitor" to "With preceding visitor".
③ As the door 160 is opened, the visitor enters the security area.
④ After recognition of the pass through the access means 110, the facial image information of the visitor is obtained from the image capturing device 120 and stored in the database.
⑤ The entry image is recorded through the image capturing device 120 installed at the entrance and stored in the database.
⑥ The X-ray search image for the visitor's belongings is stored in the database.
⑦ Through the value of the signal detected when the visitor passes through the door-type detector 140, only the presence/absence of possession of portable articles during passage is stored in the database.
⑧ When metal or the like is detected by the detection means 170 performed by the security personnel, the result including only the presence/absence of detection is stored in the database.
⑨ After the search by the detection means 170, the security personnel conducts a security check for the subj ect of search inspection standing at the search inspection stand 102. That is, the preceding visitor (i.e., the subject of search inspection) waits on the footrest sensor 102 to receive the security check by the security personnel.
⑩ Security check completion: When the security personnel completes the security check for the preceding visitor (i.e., the subject of search inspection), the preceding visitor (the subject of search inspection) descends from the footrest sensor 102 according to the instructions of the security personnel. Accordingly, the footrest sensor 102 transmits a search completion signal, and this is the case of no preceding visitor and the pass recognition procedure is executed (301). On the other hand, if this is the case of with a preceding person, the pass information is ignored, and the door is placed in an open state (302).

The entry into the security area (i.e., entry into an air side) is summarized as follows.

**[Table 1]**

| CAT | Acquisition step | Acquisition means | Storage information | Note |
|---|---|---|---|---|
| Access control | Pass recognition | Access means (card reader, etc.) | -. Pass information (number, etc.) | Req. |
| | | | -. Authority information | |
| | | | -. Entry date and time (up to seconds) | |
| | | | -. Entry serial number | |
| | entry | Image capturing device (camera, etc.) | -. Facial image | Req. |
| | | | -. Entry (IP CCTV) | |
| Security Check | Move | X-Ray | -. X-Ray image | Req. |
| | | Door-type detector | -. Whether or not detected by a door-type detector | Req. |
| | | Detection means (hand scanner) | -. Whether or not detected | Req. |
| | Search completion | Detection stand sensor | -. Leaving time according to detection of search completion time (entry time to security area) | Req. |

The exit from the secure area (i.e., entering a land side) is summarized as follows.

**[Table 2]**

| CAT | Acquisition step | Acquisition means | Storage information | Note |
|---|---|---|---|---|
| Access | Pass | Access means | -. Pass information(number, | Req. |
| control | recognition | (card reader, etc.) | etc.) | |
| | | | -. Authority information | |
| | | | -. Entry date and time (up to seconds) | |
| | | | -. Exit serial number | |
| | Entry | Image capturing device (camera, etc.) | -. Facial image | Req. |
| | | | -. Entry image(IP CCTV) | |
| Security Check | Move | X-Ray | -. X-Ray image | Opt. |
| | | Door-type detector | -. Whether or not detected by a door-type detector | Opt. |
| | | Detection means | -. Whether or not detected | Opt. |
| | Search completion | Detection stand sensor | -. Leaving time according to detection of search completion time (entry time to security area) | Opt. |

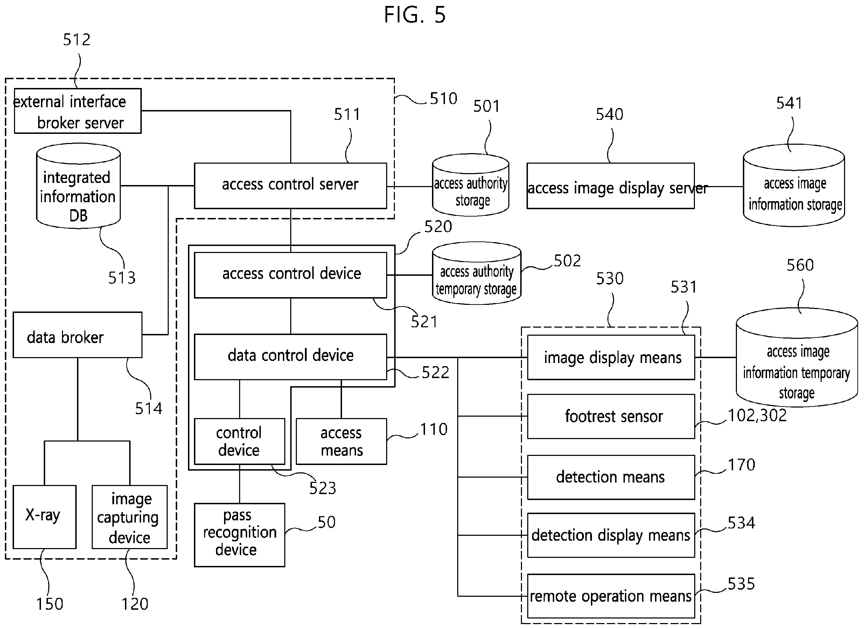

FIG. 5 illustrates a configuration block diagram of an integrated security execution system 500 according to an embodiment of the present invention. Referring to FIG. 5, the integrated security execution system 500 may be configured to include a data management unit 510, an access control unit 520, a detection control unit 530, a pass image display server 540, an access authority storage unit 501, an access authority temporary storage unit 502, a pass image information storage unit 541, a pass image information temporary storage unit 560, and the like.

The data management unit 510 may be configured to include an access control server 511 for managing access control, an X-ray 150, an image capturing device 120 for acquiring facial image information, entrance image information, an integrated information database 513 for classifying and storing pass information, facial image information, and entry image for each visitor, a data broker 514 for connecting the data generated from the X-ray 150 and the image capturing device 120 to the integrated information database 513, an external interface broker server 512 connected to an external interface, and the like. The integrated information database 513 may be configured in the access control server 511 or may be configured as a separate database server.

The image capturing device 120 may be an Internet protocol closed circuit television (IP CCTV), a closed circuit television (CCTV), a charge-coupled device (CCD) camera, a complementary metal-oxide semiconductor (CMOS) camera, or the like. Accordingly, the image capturing device 120 may record and save the facial image information and the entry image.

By using the external interface broker server 512 and an agent program, it is possible to easily install and operate only by acquiring access information registered and managed by other security systems, so easy interworking is possible. The agent program extracts data from other access control systems in a data format suitable for the intelligent integrated security system operation, and transmits the extracted data to the external interface broker server 512. The information received by the external interface broker server 512 is stored in the access authority information storage unit 501 of the access control unit 520.

The information extracted by the agent is converted into a message (protocol) format that can be used in the intelligent integrated security system, and is transmitted and stored to the external interface broker server. The intelligent integrated security system can transmit/receive the data required for access control with other access control system products through the external interface broker server (middleware SW).

In addition, the pass information, access date and time, access/exit serial number, etc. may be stored in the integrated information database 513 for security search when the visitor enters/exits the secure area. Entry and exit are 1: 1, and two consecutive entry and exit can be set to be impossible. If there is one entry unconditionally and there is no exit one, re-entry into the security area may be set impossible. The same works for exit. In addition, the comparison of stored information in follow-up tracking, security check, entering/exiting can be easily viewed/read with only the pass number.

In addition, it is possible to inquire and/or manage detailed information about a specific visitor by period. In addition, all information stored in the integrated information database 513 is stored using block chain technology. Therefore, it is impossible to falsify or modify the data in the future, so it can have "evidence admissibility" in the event of a security accident.

In addition, by comparing the X-ray images generated through the X-ray 150 at the time of entry and exit, it is possible to compare the difference between the carry-in article and the carry-out article. To this end, access information and security search information are individually integrated and stored, and the type of articles is automatically identified through artificial intelligence (AI) and deep learning of the stored X-RAY image information during the security check, and a carry-in/carry-out list can be created/recorded individually.

In other words, the difference information between the X-ray images of the carry-in articles and carry-out articles is analyzed and compared. Accordingly, when a difference between the carry-in article and the carry-out article occurs, warning alarm information is generated. The warning alarm information may be a combination of voice, text, and graphic.

In addition, by comprehensively determining the past information (historical information) such as the carry-in articles and number of violations of security regulations of the visitor, it is possible to inform the security personnel that the visitor is an interested/attention visitor when performing security check.

The access control unit 520 may be configured to include an access control device 521, a data control device 522, a control device 523, and the like. The access control device 521 performs access control, and the pass recognition means 50 performs a function of generating pass information. To this end, the pass recognition means 50 may constitute a reader capable of reading iris recognition, fingerprint recognition, barcodes, quick response (QR) codes, radio frequency identification (RFID), and the like. The access means 110 may be bio-information of a human body, a card, a communication device, etc. including the unique information of the visitor. The access control device 521, the data control device 522, the control device 523, and the like may be configured with a processor, a memory, a communication circuit, software, and the like.

The memory may include at least one type of storage medium among a flash memory type, a hard disk type, a multimedia card micro type, a card type memory (e.g., Secure Digital (SD) or eXtreme Digital (XD) memory, or the like), a Random Access Memory (RAM), a Static Random Access Memory (SRAM), a Read Only Memory (ROM), an Electrically Erasable Programmable Read Only Memory (EEPROM), a Programmable Read Only Memory (PROM), a magnetic memory, a magnetic disk, and an optical disk. In addition, the memory may operate in associated with web storage and a cloud server for performing a storage function on the Internet.

The access authority storage unit 501 has a database that records access authority for the visitor. In addition, the access authority temporary storage unit 502 receives and stores some information from the access authority storage unit 501, and provides it to the access control device 521. Accordingly, the access control device 521 performs a function of opening and closing the door 160 by identifying the access authority information. The door 160 may be configured as an electronic automatic door. Since the electronic automatic door is widely known, a further description thereof will be omitted.

As the information collected by the data broker 514 and access control device 520 for security check information, all information from the time when the visitor recognizes the pass for the "pass recognition means 50" for access to the time when the search is completed by the "foot sensor 102" is integrated and stored as one process data based on the pass information.

The pass image display server 540 performs a function of displaying the pass information as an image. To this end, the pass image information storage unit 541 may be configured.

The detection control unit 530 may be configure to include an image display means 531 for displaying the image information of the pass, a search stand sensor 532, a detection means 170, a search display means 534, a remote operation means 535, and the like. The image display means 531, the search display means 534, etc. may be a liquid crystal display (LCD), a light emitting diode (LED) display, an organic LED (OLED) display, a touch screen, a flexible display, and the like. The detection means 170 may be a hand scanner.

The search display means 534 refers to a device capable of visually identifying the search inspection state of the preceding subject of search inspection or whether the preceding subject of search inspection is possible to enter the security area, such as "entry allowed", "no entry allowed", etc. of a person waiting for being searched.

The remote operation means 535 refers to a device, such as a remote control, that can manually operate the reset of the entire system in case of an unexpected error, or the manual opening of a door, regardless of whether or not to have access authority in case of VIP or in certain circumstances.

The pass image information temporary storage unit 560 receives and temporarily stores the pass image information from the pass image information storage unit 541.

The access authority storage unit 501, the access authority temporary storage unit 502, the pass image information storage unit 541, and the pass image information temporary storage unit 560 may include at least one type of storage medium among a flash memory type, a hard disk type, a multimedia card micro type, a card type memory (e.g., secure digital (SD) or eXtreme digital (XD) memory, or the like), a random access memory (RAM), a static random access memory (SRAM), a read only memory (ROM), an electrically erasable programmable read only memory (EEPROM), a programmable read only memory (PROM), a magnetic memory, a magnetic disk, and an optical disk. In addition, they may operate in associated with web storage and a cloud server for performing a storage function on the Internet.

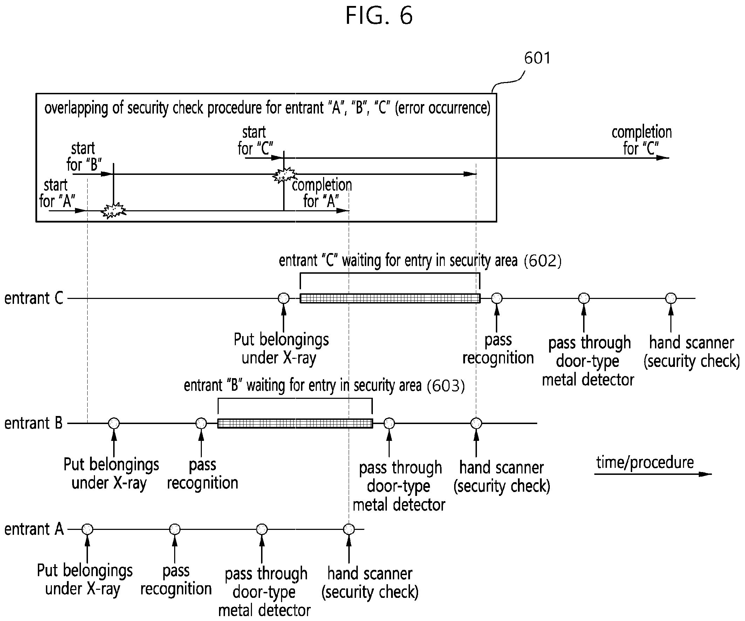

FIG. 6 is a diagram illustrating an overlapping process of a general security check task. Referring to FIG. 6, in general, it is not possible to automatically or manually detect the start and end time of the security check procedure performed for each visitor (entrant A, B, C). In addition, due to the limitations of the access control system (unauthorized entry, etc.), the security check procedure is overlapped (601, 602, 603)) between visitors, so it is impossible to accurately integrate the security check information with the access information and store/manage/inquire the information for each visitor. It is only possible to estimate the number of visitors based on the access time.

In an embodiment of the present invention, compared to the method according to FIG. 6, it is possible to store/manage/inquire for each visitor.

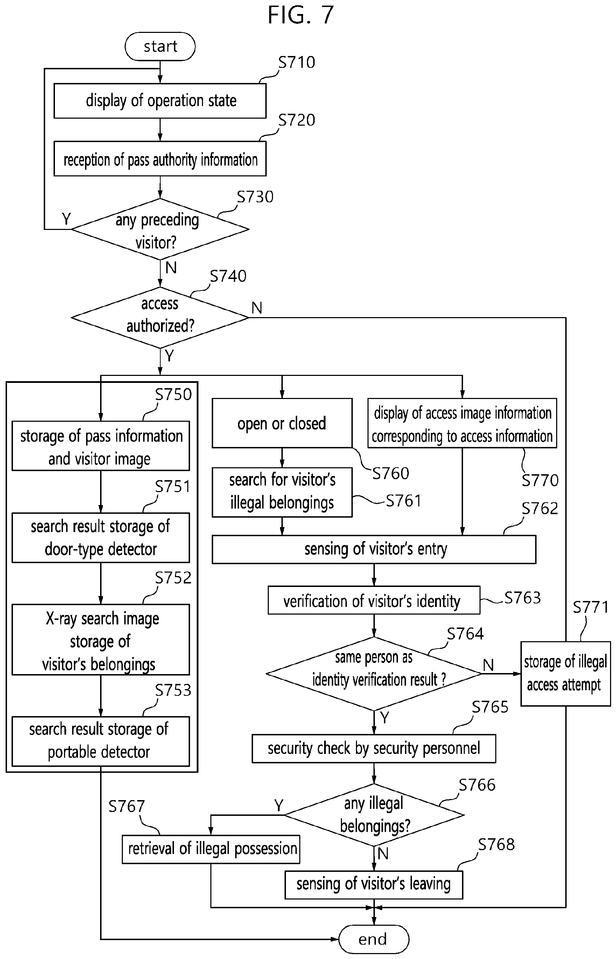

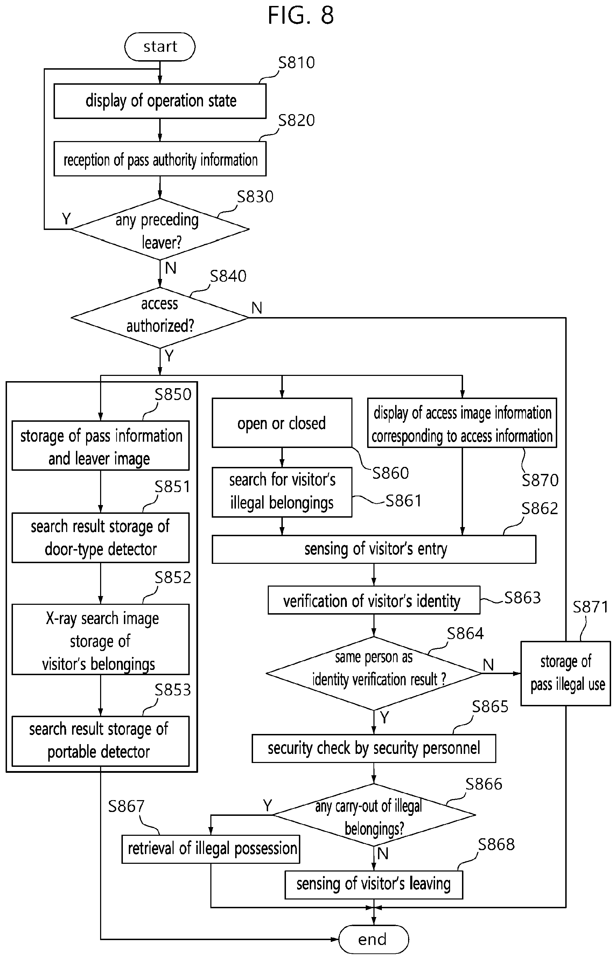

A diagram showing an embodiment of the present invention is illustrated in FIGS. 7 and 8. FIG. 7 illustrates a flowchart of an intelligent integrated security execution procedure upon entry according to an embodiment of the present invention. Referring to FIG. 7, as the visitor is authenticated by the access means 110, the access control controller 520 displays an operation state and receives pass authorization information (steps S710 and S720).

Thereafter, the access control server 511 determines whether a preceding visitor exists (step S730).

In step S730, if a preceding visitor exists, steps S710 to S730 proceed again.

On the other hand, in step S730, if the preceding visitor does not exist, the access control server 511 determines whether there is an access authority (step S740). If there is no access authority in step S740, this is saved as an illegal access attempt and the process is terminated (step S771).

On the other hand, if there is access authority in step S740, the pass information and the image of the visitor are stored, the search result of the door-type detector is stored thereafter, and the X-ray search image information for the visitor's belongings is stored thereafter. Then, the search result of the portable detector (that is, the detection means) is stored (steps S750, S751, S752, S753).

Meanwhile, the door is opened or closed together accordingly, and then, the illegal possession of the visitor is searched, and then the footrest sensor 102 detects the entry of the visitor, and thereafter, the access control server 511 verifies the identity of the visitor (steps S760, S761, S762, S763). Thereafter, the access control server 511 identifies whether the identity verification result shows the same person (step S764). In other words, even if the visitor has the authority to pass, it is controlled so that the visitor cannot enter until the search for the subject of search inspection is complete.

If it is determined that they are not the same person in step S764, the process goes to step S771.

On the other hand, if it is determined that they are the same person in step S764, a security check is performed by a security personnel, and it is identified whether there is an illegal possession (steps S765 and S766). If there is an illegal possession in step S766, the security personnel retrieves the illegal possession (step S767). On the other hand, if there is no illegal possession in step S766, the leaving of the visitor is sensed on the footrest sensor 102 and the sensing is transmitted to the access control server 511 (step S768).

On the other hand, after step S740, the access image information corresponding to the access information is displayed (step S770). Thereafter, steps S762 to S768 are performed.

It is possible to conduct a thorough security check by controlling access until the search for the preceding subject of search inspection is completed during rush hour. In addition, the information on actions performed during all security checks is integrated and stored with a main key value and/or managed.

FIG. 8 illustrates a flowchart of an intelligent integrated security execution procedure upon exit according to an embodiment of the present invention. Unlike FIG. 7, the illustration is made with respect to a leaver in FIG. 8, but the illustration can be made with respect to a visitor. This classification is only for convenience of understanding. Referring to FIG. 8, as the leaver makes authenticates with the access means 110, the access control unit 520 displays an operation state and receives the pass authorization information (steps S810 and S820).

Thereafter, the access control server 511 determines whether there is a preceding leaver (step S830).

In step S830, if there is a preceding leaver, steps S810 to S830 are proceeded again.

On the other hand, in step S830, the access control server 511 determines whether there is an access authority if there is no preceding leaver (step S840). If there is no access authority in step S840, this is saved as an illegal access attempt and the process is terminated (step S871).

On the other hand, if there is an access authority in step S840, the pass information and the image of the leaver are stored, the search result of the door-type detector is stored thereafter, and then the X-ray search image information for the leaver's belongings is stored, and then the search result of the portable searcher (that is, the detection means) is stored (steps S850, S851, S852, S853).

Meanwhile, the door is opened or closed accordingly, and after that, the illegal possession of the leaver is searched, and then the footrest sensor 102 detects that the entry of the leaver, and then the access control server 511 verifies the identity of the leaver (steps S860, S861, S862, S863). Thereafter, the access control server 511 identifies whether the identity verification result shows the same person (step S864).

If it is determined that they are not the same person in step S864, the process goes to step S871.

On the other hand, if it is determined that they are the same person in step S864, a security check is performed by a security personnel, and it is identified whether there is an illegal possession (step S865, S866). If there is an illegal possession in step S866, the security personnel retrieves the illegal possession (step S867). On the other hand, if there is no illegal possession in step S866, the footrest sensor 102 detects the leaving of the leaver and transmits the detection to the access control server 511 (step S868).

On the other hand, after step S840, the access image information corresponding to the access information is displayed (step S870). Thereafter, steps S862 to S868 proceed.

In addition, the steps of the method or the algorithm which has been described regarding the embodiments proposed herein are realized in the form of program instructions executable through various computer means such as a microprocessor, a processor, a central processing unit (CPU) and are recordable in a computer-readable medium. The computer-readable recording medium may include program (instruction) codes, data files, and data structures, alone or in combination.

The program (instruction) codes recorded on the medium may be designed and configured specifically for the present invention or may be a type that is known and readily available to those having ordinary skill in the art. Examples of the computer-readable recording medium may include magnetic media such as a hard disk, a floppy disk, and a magnetic tape, an optical media such as a CD-ROM, a DVD, and Blue-ray, and a semiconductor storage element specially configured to store and execute a program (instruction) code such as a ROM, a RAM, and a flash memory.

Here, examples of a program (instruction) code may include high-level language code executable by a computer using an interpreter in addition to machine code created by a compiler. The hardware device may be configured to operate as at least one software module to perform an operation of the present invention and vice versa.

## Claims

1. An intelligent integrated security system comprising:
a door 160;
a search completion detection means 120,102 for generating access information by sensing a visitor entering the door 160 and moving to a search area; and
an access control server 511 that opens or closes the door 160 in order to permit or block an entry of another visitor according to whether or not search for the visitor is completed using the access information.

2. The intelligent integrated security system of claim 1, wherein the access control server 511 does not recognize and ignores the access information for the other visitor after the visitor until the search is completed by the search completion detection means 120 and 102.

3. The intelligent integrated security system of claim 1, wherein the access information is stored in an integrated information database 513 as big data through a unique key value for each visitor.

4. The intelligent integrated security system of claim 1, wherein the access information includes pass information, facial image information, and an access image for entry of the door 160, and the big data includes authority information, entry date and time information, entry and exit serial number information along with the access information.

5. The intelligent integrated security system of claim 4, wherein the entry and exit are 1: 1, and two consecutive entry or exit is impossible.

6. The intelligent integrated security system of claim 1, comprising an X-ray that generates an X-ray image by sensing belongings of the visitor and other visitor.

7. The intelligent integrated security system of claim 6, wherein if the X-ray image is different when entering and exiting, alarm information is generated.

8. The intelligent integrated security system of claim 1, comprising a detection means 170 for detecting only the presence or absence of belongings, and stores a result of the detected presence or absence.

9. The intelligent integrated security system of claim 1, wherein whether or not the search for the visitor is completed is performed using entry and exit times of the visitor extracted from the access information generated through an image capturing devices 120 installed at both ends of the search area.

10. The intelligent integrated security system of claim 1, wherein whether or not the search for the visitor is completed is performed through a search completion signal of a sensor 102 installed at an end of the search area.

11. An intelligent integrated security method comprising the steps of:
(a) generating access information by sensing a visitor entering a door (160) and moving to a search area by a search completion detection means 120,102;
(b) determining, by an access control server 511, whether or not to complete search for the visitor using the access information;
(c) opening or closing, by the access control server 511, the door 160 in order to permit or block an entry of another visitor according to a determination result.

12. The intelligent integrated security method of claim 11, wherein the access control server 511 does not recognize and ignores the access information for the other visitor after the visitor until the search is completed by the search completion detection means 120 and 102.

13. The intelligent integrated security method of claim 11, wherein the access information is stored in an integrated information database 513 as big data through a unique key value for each visitor.

14. The intelligent integrated security method of claim 11, wherein the access information includes pass information, facial image information, and an access image for entry of the door 160, and the big data includes authority information, entry date and time information, entry and exit serial number information along with the access information.

15. The intelligent integrated security method of claim 14, wherein the entry and exit are 1:1, and two consecutive entry or exit is impossible.

16. The intelligent integrated security method of claim 11, wherein an X-ray that generates an X-ray image by sensing belongings of the visitor and other visitor is comprised.

17. The intelligent integrated security method of claim 16, wherein if the X-ray image is different when entering and exiting, alarm information is generated.

18. The intelligent integrated security method of claim 11, wherein whether or not the search for the visitor is completed is performed using entry and exit times of the visitor extracted from the access information generated through an image capturing devices 120 installed at both ends of the search area.

19. The intelligent integrated security method of claim 11, wherein whether or not search for the visitor is completed is performed through a search completion signal of a sensor 102 installed at an end of the search area.

20. A computer-readable storage medium storing program code for executing the intelligent integrated security method according to claim 11.
